# EUROPEAN PATENT APPLICATION

(11) **EP 4 706 953 A1**
(43) Date of publication of application: **11.03.2026**
(21) Application number: 24290030.6
(22) Date of filing: 06.09.2024
(51) Int. Cl.: B32B 5/02, B32B 5/26, B32B 1/08, B63J 2/10, E04F 17/04, F24F 13/02

(54) **LAYERED STRUCTURE OF A FLAT, DIMENSIONALLY STABLE BUILDING PANEL AND A SELF-SUPPORTING AIR DUCT MADE OF THE LAYERED STRUCTURE**

(71) Applicant: SAINT-GOBAIN ISOVER, 92400 Courbevoie (FR)
(72) Inventor: TISO, Mattia, 68305 Mannheim (DE)
(74) Representative: Kuhnen & Wacker Patent- und Rechtsanwaltsbüro PartG mbB

(57) **Abstract**

The invention pertains to a layered structure of a flat, dimensionally stable building panel (2) comprising at least
- a first layer (3) of dimensionally stable mineral wool;
- a second layer (4) of an aluminum foil, which is arranged with a first large surface (5) of the second layer (4) on a first large surface (6) of the first layer (3),
characterized in that a third layer in the form of a woven reinforcing layer (9) consisting predominantly of mineral fibers is arranged between a first large surface (5) of the first layer (4) and a first large surface (7) of the second layer (4), the second large surface (8) of the second layer (4) being exposed to an environment and thus the second layer (4) being the outermost layer. The invention also pertains to a self-supporting air duct (12) made of the layered structure (1).

## Description

The invention pertains to a layered structure of a flat, dimensionally stable building panel and a self-supporting air duct made of the layered structure.

US 6,311,456 B1 discloses a useful improved high-density glass wool rigid panel for use in the construction of air distribution ducting in air conditioning and heating installations of the sort made of the box-shaped high-density glass wool body with optional glass fiber reinforcing mesh between the glass wool body and an outermost aluminum layer. With respect to the geometrical properties the rigid panel is formed with a step on opposite sides, covered with aluminum strips on the larger surfaces, wherein there is an overlap of that aluminum strips on step running right around its smaller side.

This is a well-known and well approved solution for building and establishing self-supporting air ducts for air-conditioning and heating installations, providing sufficient airtightness as well as sufficient mechanical stability for general use air ducts and making core ducts of metal unnecessary.

In ship buildings, ventilation ducts are normally made of steel. This is to comply with the SOLAS regulation (Safety of Life at Sea, IMO resolution) which require a duct made of steel of equivalent fire-resistant material. Mineral wool insulation is normally installed around the steel ducts to guarantee thermal and acoustic insulation.

However, there is a need of improving the mechanical stability as well as for improving the fire resistance properties of such a panel in order to fulfill special requirements within the shipbuilding technology such as enhanced fire resistance requirements as well as enhanced mechanical stability, the latter being necessary because of the all in all moving vessel body during a life span of the vessel thereby increasing mechanical force impacts for the duct system when compared to a land-based duct system. Further on, there is a tendency that such duct systems made of rigid glass wool panels have to fulfill higher fire resistance requirements when used within a vessel environment.

These objects of the invention are solved by a layered structure of a flat, dimensionally stable building panel comprising at least
- a first layer of dimensionally stable mineral wool;
- a second layer of an aluminum foil, whereas a third layer in the form of a woven reinforcing layer consisting predominantly of mineral fibers is arranged between the first large surface of the first layer and a first surface of the second layer. The second large surface of the second layer is exposed to the environment. Thus, the second layer is an outermost layer of the layered structure.

It has been found that adding a reinforcing woven layer predominantly made of mineral fibers being arranged between the first and the second layer significantly improves the mechanical stability as well as the fire resistance properties and fulfills the respective needs within the shipbuilding industry. Surprisingly adding only one woven reinforcing layer to the known rigid panel significantly improves the properties with respect to mechanical stability and particularly the fire resistance of an air duct made of such a rigid panel.

According to one embodiment of the invention a fourth layer of a glass silk fabric may be arranged on a second large surface of the first layer opposite the first large surface of the first layer.

Such a fourth layer forms an inner layer of an air duct made from such a rigid building panel of the invention thereby significantly reducing airflow resistances and also improving the sound damping properties.

Such a fourth layer of a glass silk fabric arranged on the second large surface of the first layer forms a second outermost layer of the layered structure helping to minimize airflow resistance of an air duct within which this second outermost layer of the layered structure forms the innermost layer of the air duct.

In a further embodiment the woven reinforcing layer
- is a woven fabric made of glass fibers;
- is a woven fabric made of glass fibers based on basalt fibers.

Such a woven reinforcing layer helps to fulfill the enhanced requirements with respect to mechanical stability as well as fire resistance that are needed within the shipbuilding industry.

According to another embodiment the woven reinforcing layer is a woven fabric made of a monofilament of basalt filaments.

According to another embodiment the reinforcing woven layer is attached to the first layer by the binder used for binding the first layer or by a PE-based binder/hotmelt. Using the binder of the first layer advantageously allows to use standard techniques known to the expert to apply the reinforcing woven layer as a facing prior to curing of the first layer with the reinforcing woven layer.

According to another embodiment the aluminum foil is attached to the reinforcing woven layer by means of a polyurethane adhesive and/or by means of a polyacrylate adhesive.

Using such adhesives helps to improve mechanical connection between the woven reinforcing layer and the aluminum foil thereby improving the transfer shear forces into the reinforcing woven layer.

The first layer is preferably a binder-bonded glass wool, providing with the reinforcing woven layer a low weight product with improved mechanics and high fire resistance properties, allowing the construction of dimension stable self-supporting air duct in vessel applications. As an alternative, a mineral wool according to WO2005033032A1, marketed by the applicant under the trade name Ultimate ^{®} may be used. Stone wool also fulfills the enhanced fire resistance requirements. however, with its higher weight due to the high shot content it is less preferred.

In a preferred embodiment, the aluminum foil is fabric-reinforced.

With respect to the air duct system the objects of the invention are solved by a self-supporting air duct made of the layered structure defined above.

A method of producing an air duct made of the dimensionally stable panel of the invention is disclosed in the above-mentioned US 6,311,456 B1 and is also applicable with the invention.

The invention will be described in more detail with the help of the attached drawings. The figures show:
- Fig.1:: a schematic cross-sectional view of the layered structure of the invention;
- Fig. 2A to 2C:: a schematic illustration of creating an air duct from a dimensionally stable building panel of the layered structure of the invention.
- Fig 3:: a schematic isometric view on an air channel made of a multitude of air ducts made of the layered structure of the invention;

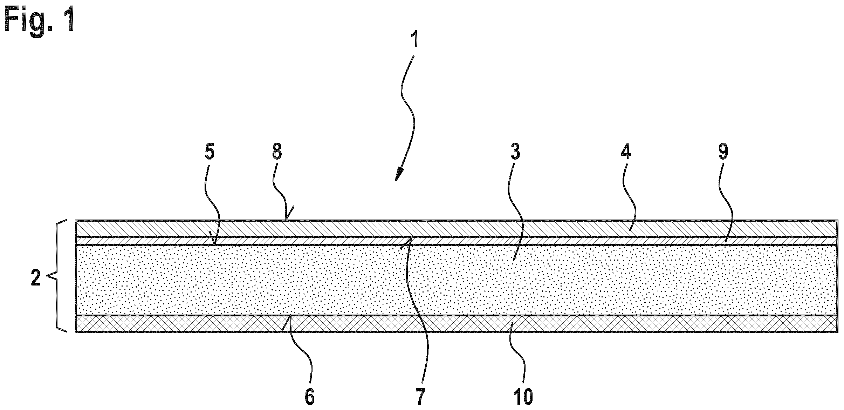

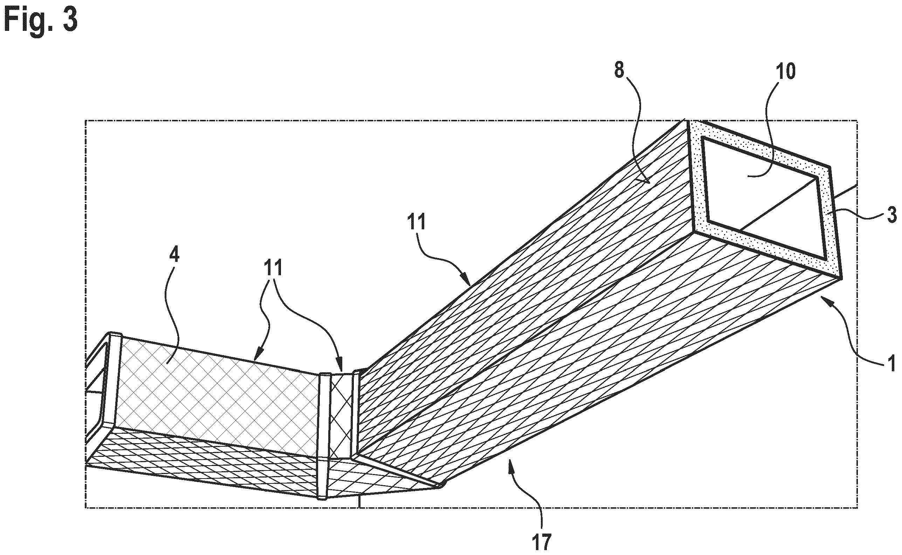

Figure 1 shows an embodiment of the layered structure 1 of the invention being a flat, dimensionally stable building panel 2 being rigid enough to be able to create self-supporting hollow structures, such as air ducts 11 (see figure 3).

The layered structure 1 has a first layer 3 made of dimensionally stable mineral wool. The first layer 3 further has a first large surface 5 and opposing to the first large surface 5 the first layer 3 has a second large surface 6.

The first layer 3 has a density that can vary between 18 kg/m³ and 100 kg/m³ and a thickness that can vary between 20 mm and 100 mm. The first layer 3, i.e. the dimensionally stable mineral wool, which in general can be a glass wool or a stone wool can be made having a laminar, a crimped or a lamellae type fiber structure.

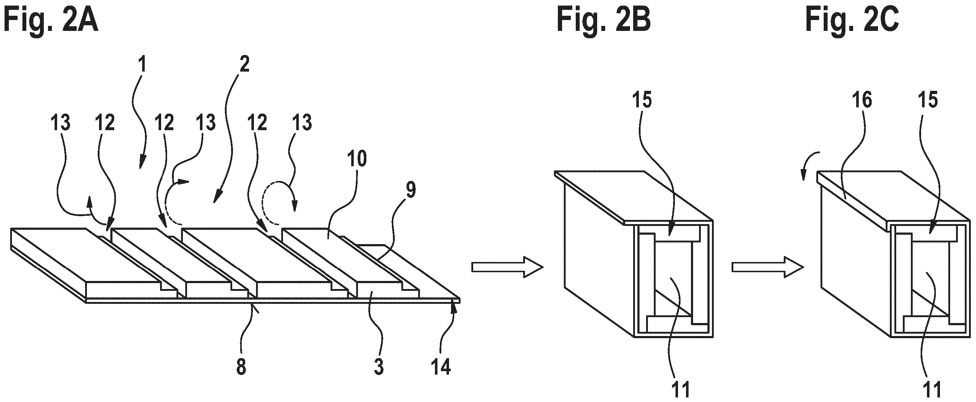

Between the first layer 3 and a second layer 4 made of an aluminum foil, more precisely between the first large surface 5 of the first layer 3 and the first large surface 7 of the second layer 4 a third layer in the form of a woven reinforcing layer 9 is located. The woven reinforcing layer 9 predominantly consists of mineral fibers, preferably it consists of basalt fibers. A suitable density grammage of the woven reinforcing layer 9 made from basalt fibers is in the range of 250 g/m² and 500 g/m², especially 300 to 400 g/m²; particularly 350 g per square meter. The woven reinforcing layer 9 forms a sandwiched layer of the layered structure 1 between the first layer 3 and the second layer 4. The second large surface 8 of the second layer 4 forms the outer surface of the air duct 11 and the air channel 17 made of a multitude of air ducts 11 and is exposed to the environment (Fig. 2B, Fig. 2C, Fig. 3).

The design of the woven reinforcing layer 9 according to the above details fulfills a so-called steel equivalent for ventilation duct requirements within the ship industry claiming that it is noncombustible and must comply to a standard fire test as non-load bearing structure for 30 minutes following the requirements for testing "B" class divisions (B-0 division), which focusses on the testing criteria "integrity".

An embodiment of the invention using a glass wool with a density of 80kg/m³ with an LOI ("loss of ignition" determined according to EN 13820:2003 *Thermal insulating materials for building applications. Determination of organic content*) of 6 weight percent for the first layer 3 and a basalt fiber textile for the woven reinforcing layer 9 has passed and complied to the integrity criterion required for the B-0 division. The test has been carried out under a standard ISO 834 fire curve. Besides a measurement of gap gauge, a flaming particular at the gaps must not occur during the 30 min test run. It has been found that after 30 minutes of test the specimen did not present any integrity failure. The tested embodiment did not comprise the aluminum foil layer 4 and the glue to attach the aluminum foil onto the basalt fiber textile. In the test, the surface exposed to the environment is exposed to the fire. The aluminum layer under the test conditions (exposure to temperatures of ISO 834 fire curve) leads to a quick melting of the aluminum foil, while the additional fire load of the glue is negligible compared to that of the fire curve. Therefore, a product having the aluminum foil on top of the basalt textile, especially made of Basaltex BAS 350A, in order to achieve the required airtightness also fulfills this fire resistance test.

In a comparative test a glass wool product of identical density of 80kg/m³ and of identical LOI but without the basalt fiber textile reinforcing did not pass the integrity test.

The main object of the aluminum foil is to provide air tightness of the product of the invention in a thickness direction of the layered structure 1 and thus to an air duct 11 made of the products according to the invention. It does only contribute negligibly to the improved mechanics compared to the woven reinforcing layer 9.

An appropriate connection between the woven reinforcing layer 9 and the second layer 4 can be achieved by means of a polyurethan adhesive or by means of a polyacrylate adhesive.

The woven reinforcing layer 9, i.e. the basalt textile is in direct contact with the first layer 3, respectively its first large surface 5 and bonded to it by preferably the same binder which is used to bound the first layer 3.

Additionally, there is a possibility to enhance adhesion of the second layer 4 to by interposing a glass fiber fabric mesh (not shown) between the first large surface 7 and the woven reinforcing layer 9.

To minimize the airflow resistance of an air duct 11 made from the layered structure 1 of the invention a glass silk fabric establishing a fourth layer 10 is arranged on a second large surface 8 of the first layer 3. The glass silk fabric preferably forms the second outermost layer of the building panel 2. When an air duct 11 is made from the layered structure 1 of the invention the glass silk fabric of the fourth third layer forms an innermost layer facing towards the hollow space surrounded by the air duct 11 and is in direct contact with air flowing through the air duct 11.

The advantages of the invention especially the advantages of an air duct made from the layered structure of the invention provides the following advantages:
Compared to the steel channels that are common within the shipbuilding industry the invention provides a lower weight per meter of a certain channel size, a faster installation time as it is not necessary to produce and install a metal core channels first which has to be packed into installations afterwards. A same fire resistance performance for an air duct made from the inventive layered structure can be achieved although there is no steel channel present anymore and thereby fulfilling the fire resistance requirements of the shipbuilding industry.

The creation of an air duct 11 is illustrated by figures 2A to 2C and will be described below.

Starting with a dimensionally stable building panel 2 a plurality of cross-sectionally L-shaped grooves 12 are cut at certain distances to each other. The grooves 12 partially remove the fourth layer/ glass fiber fabric mesh 10 and the first layer 3 of the dimensionally stable mineral wool, leaving the third layer/woven reinforcing layer 9 as well as the second layer/aluminum foil 4 untouched (see figure 2A). Small areas of the remaining third layer 9 and the second layer 4 are dimensionally flexible thereby providing a hinge joint for adjacent remaining portions of the first layer and the fourth layer. Adjacent portions of the first layer and the fourth layer are bendable relative to each other which is illustrated by arrows 13.

In the area of a lateral end portion of the building panel 2 an elongated tongue 14 of a flexible composite layered portion just comprising the third layer 9 and second layer 4 is formed.

By bending the adjacent portions of the first layer and the fourth layer along the arrows 13 an air duct 11 having for example a rectangular cross-section is formed (see figure 2B) and finally the elongated tongue 14 is bent to overlap with an adjacent portion along one of the edges of the air duct 11. After establishing the overlap, the overlapping portion 16 additionally is preferably prefixed by staples and/or sealed and finally fastened with an adhesive tape (not shown) having at least a supporting layer of aluminum.

A touching area of the elongated tongue 14 the overlapping portion 16 additionally may be glued by the help of a fire resistive glue.

In order to create an air channel 17 from a plurality of such air ducts 11 it is further preferable to enhance the mechanical stability of the total air channel by fastening two adjacent air ducts 11 together at their leading edges 15 by the use of a fire resistive glue. The joint is finally fastened with an adhesive tape (not shown) having at least a supporting layer of aluminum.

A fire resistive glue mentioned above may be a self-hardening water glass adhesive with mineral fillers.

### List of reference numbers

- 1: layered structure
- 2: building panel
- 3: first layer/mineral wool
- 4: second layer/aluminum foil
- 5: first large surface of first layer/mineral wool
- 6: second large surface of first layer/mineral wool
- 7: first large surface of second layer/aluminum foil
- 8: second large surface of second layer/aluminum foil
- 9: third layer/woven reinforcing layer
- 10: fourth layer/glass fiber fabric mesh
- 11: air duct
- 12: grooves
- 13: arrows
- 14: elongated tongue
- 15: leading edge
- 16: overlapping portion
- 17: air channel

## Claims

1. Layered structure of a flat, dimensionally stable building panel (2) comprising at least
- a first layer (3) of dimensionally stable mineral wool;
- a second layer (4) of an aluminum foil, which is arranged with a first large surface (5) of the second layer (4) on a first large surface (6) of the first layer (3),
**characterized in that** a third layer in the form of a woven reinforcing layer (9) consisting predominantly of mineral fibers is arranged between a first large surface (5) of the first layer (4) and a first large surface (7) of the second layer (4), the second large surface (8) of the second layer (4) being exposed to an environment and thus the second layer (4) being the outermost layer.

2. Layered structure according to claim 1, **characterized in that** a fourth layer (10) of a glass fiber fabric mesh is arranged on a second large surface (6) opposite to the first large surface (6) of the first layer (3) and particularly forming an outermost layer on a side of the first layer (3) on which the second large surface (6) of the first layer (3) is located.

3. Layered structure according to claim 1 or 2, **characterized in that** the woven reinforcing layer (9)
- is a woven fabric made of and at ease if, namely glass fibers;
- is a woven fabric made of glass fibers based on basalt fibers.

4. Layered structure according to one of the preceding claims, **characterized in that** the woven reinforcing layer (9) is a woven fabric made of a monofilament of basalt filaments.

5. Layered structure according to one of the preceding claims, **characterized in that** the second layer (4), i.e. the aluminum foil is attached to the reinforcing woven layer (9) by means of a polyurethane adhesive and/or by means of a polyacrylate adhesive.

6. Layered structure according to one of the preceding claims, **characterized in that** the first layer (3) is formed from a binder-bonded glass wool or from a binder-bonded Ultimate^{®} mineral wool.

7. Layered structure according to one of the preceding claims, **characterized in that** the aluminum foil (4) is fabric-reinforced.

8. Self-supporting air duct made of the layered structure (1) defined in one of the claims 1 to 7.
